# EUROPEAN PATENT APPLICATION

(11) **EP 4 524 869 A1**
(43) Date of publication of application: **19.03.2025**
(21) Application number: 24777202.3
(22) Date of filing: 08.07.2024
(51) Int. Cl.: G06Q 50/10

(54) **INTEGRATED MONITORING DEVICE, METHOD, AND PROGRAM**

(30) Priority: 18.07.2023 JP 2023116599
(71) Applicant: DAIKIN INDUSTRIES, LTD., Osaka-Shi, Osaka 530-0001 (JP)
(72) Inventor: TERANISHI, Shota, Osaka-Shi Osaka 5300001 (JP); EGUCHI, Katsuya, Osaka-Shi Osaka 5300001 (JP)
(74) Representative: Hoffmann Eitle
(86) International application number: PCT/JP2024/024560
(87) International publication number: WO 2025/018197

(57) **Abstract**

Pieces of information collected from multiple monitoring devices about equipment apparatuses installed in the same property are linked together. One embodiment of the present disclosure provides a centralized monitoring device for collecting information about equipment apparatuses from a first monitoring device configured to monitor equipment apparatuses installed in a plurality of properties and from a second monitoring device configured to monitor equipment apparatuses installed in a plurality of properties, the centralized monitoring device including a control unit configured to: obtain information about properties in which the equipment apparatuses monitored by the first monitoring device are installed; obtain information about properties in which the equipment apparatuses monitored by the second monitoring device are installed; identify a same property based on both the information about the properties in which the equipment apparatuses monitored by the first monitoring device are installed and the information about the properties in which the equipment apparatuses monitored by the second monitoring device are installed; and store both pieces of information about the equipment apparatuses installed in the properties identified as the same property, in association with each other.

## Description

### Technical Field

The present disclosure relates to a centralized monitoring device, method, and program.

### Background Art

It is known that monitoring devices monitor equipment apparatuses installed in multiple properties (see, for example, Patent Document 1). Monitoring devices collect information about the equipment apparatuses installed in each property.

### Citation List

### Patent Documents

Patent Document 1: International Publication No. WO 2013/124887

### Summary of the Invention

### Problem to be solved by the invention

To make efficient use of information about equipment apparatuses collected by multiple monitoring devices, it is desirable if pieces of information that relate to equipment apparatuses installed in the same property are linked together.

The present disclosure therefore aims to link pieces of information collected from multiple monitoring devices about equipment apparatuses installed in the same property.

### Means for solving the problem

A first example of the present disclosure provides a centralized monitoring device. The centralized monitoring device collects information about equipment apparatuses from a first monitoring device configured to monitor equipment apparatuses installed in a plurality of properties and from a second monitoring device configured to monitor equipment apparatuses installed in a plurality of properties, and the centralized monitoring device includes a control unit that is configured to:
obtain information about properties in which the equipment apparatuses monitored by the first monitoring device are installed;
obtain information about properties in which the equipment apparatuses monitored by the second monitoring device are installed;
identify a same property based on both the information about the properties in which the equipment apparatuses monitored by the first monitoring device are installed and the information about the properties in which the equipment apparatuses monitored by the second monitoring device are installed; and
store both pieces of information about the equipment apparatuses installed in the properties identified as the same property, in association with each other.

By this means, data collected from monitoring devices that monitor different types of equipment apparatuses, such as "a monitoring device that monitors air conditioners" and "a monitoring device that monitors lighting equipment" (that is, devices provided for per type of equipment apparatus), can be linked together. Also, data collected from monitoring devices that provide different services, such as "a monitoring device that provides an air conditioner operation service" and "a monitoring device that monitors an air conditioner maintenance service" (that is, monitoring devices provided per type of service), can be linked together. Also, data collected from monitoring devices provided for each type of equipment apparatus and data collected from monitoring devices provided for each service can be linked.

According to the first example of the present disclosure, pieces of information collected from multiple monitoring devices about equipment apparatuses installed in the same property can be linked together.

A second example of the present disclosure is the centralized monitoring device of the first example, in which the control unit converts the information about each property into a predetermined format to identify the same property based on the information about each property as converted.

According to the second example of the present disclosure, even if each monitoring device manages address information in a different format, it is still possible to identify properties having, for example, the same address.

A third example of the present disclosure is the centralized monitoring device of the first example or the second example, in which the control unit determines whether the information about each property allows identification of the each property, based on accuracy of the information about the each property.

According to the third example of the present disclosure, only highly accurate information such as highly accurate address information can be used.

A fourth example of the present disclosure is the centralized monitoring device according to any one of the first to third examples, in which, when the same property is identified, the control unit controls the centralized monitoring device to use either the information about the properties in which the equipment apparatuses monitored by the first monitoring device are installed or the information about the properties in which the equipment apparatuses monitored by the second monitoring device are installed.

According to the fourth example of the present disclosure, there is no need to manage information of multiple properties.

A fifth example of the present disclosure is the centralized monitoring device according to any one of the first to third examples, in which: when the same property is identified, the control unit links the information about the properties in which the equipment apparatuses monitored by the first monitoring device are installed and the information about the properties in which the equipment apparatuses monitored by the second monitoring device are installed, with newly created property information; and the control unit controls the centralized monitoring device to use the newly created property information.

According to the fifth example of the present disclosure, information about properties monitored by various monitoring devices can be linked with newly created property information.

A sixth example of the present disclosure is the centralized monitoring device of any of the first to fifth examples, in which, when information about an equipment apparatus collected from the first monitoring device and information about an equipment apparatus collected from the second monitoring device pertain to a same equipment apparatus, the control unit stores only the information about the equipment apparatus collected from one monitoring device.

According to the sixth example of the present disclosure, there is no need to manage overlapping information about equipment apparatuses collected from multiple monitoring devices.

A seventh example of the present disclosure is the centralized monitoring device of any of the first to fifth examples, in which, when information about an equipment apparatus collected from the first monitoring device and information about an equipment apparatus collected from the second monitoring device pertain to a same equipment apparatus, the control unit stores both the information about the equipment apparatus collected from the first monitoring device and the information about the equipment apparatus collected from the second monitoring device.

According to the seventh example of the present disclosure, information about equipment apparatuses from various monitoring devices can be stored.

An eighth example of the present disclosure provides a method implemented by a centralized monitoring device that collects information about equipment apparatuses from a first monitoring device configured to monitor equipment apparatuses installed in a plurality of properties and from a second monitoring device configured to monitor equipment apparatuses installed in a plurality of properties. The method includes steps of:
obtaining information about properties in which the equipment apparatuses monitored by the first monitoring device are installed;
obtaining information about properties in which the equipment apparatuses monitored by the second monitoring device are installed;
identifying a same property based on both the information about the properties in which the equipment apparatuses monitored by the first monitoring device are installed and the information about the properties in which the equipment apparatuses monitored by the second monitoring device are installed; and
storing both pieces of information about the equipment apparatuses installed in the properties identified as the same property, in association with each other.

A ninth example of the present disclosure provides a program to be implemented by a centralized monitoring device that collects information about equipment apparatuses from a first monitoring device configured to monitor equipment apparatuses installed in a plurality of properties and from a second monitoring device configured to monitor equipment apparatuses installed in a plurality of properties. The program causes the centralized monitoring device to:
obtain information about properties in which the equipment apparatuses monitored by the first monitoring device are installed;
obtain information about properties in which the equipment apparatuses monitored by the second monitoring device are installed;
identify a same property based on both the information about the properties in which the equipment apparatuses monitored by the first monitoring device are installed and the information about the properties in which the equipment apparatuses monitored by the second monitoring device are installed; and
store both pieces of information about the equipment apparatuses installed in the properties identified as the same property, in association with each other.

### Brief Description of the Drawings

[FIG. 1] FIG. 1 shows an overall structure according to an embodiment of the present disclosure;
[FIG. 2] FIG. 2 shows a hardware structure of a centralized monitoring device according to an embodiment of the present disclosure;
[FIG. 3] FIG. 3 shows a functional structure of a control unit according to an embodiment of the present disclosure;
[FIG. 4] FIG. 4 shows examples of information about equipment apparatuses according to an embodiment of the present disclosure;
[FIG. 5] FIG. 5 shows examples of information about properties according to an embodiment of the present disclosure;
[FIG. 6] FIG. 6 is a diagram for explaining the management of the same properties according to an embodiment (first embodiment) of the present disclosure;
[FIG. 7] FIG. 7 is a diagram for explaining the management of the same properties according to an embodiment (second embodiment) of the present disclosure;
[FIG. 8] FIG. 8 is a diagram for explaining the association of pieces of information about equipment apparatuses according to an embodiment (first embodiment) of the present disclosure;
[FIG. 9] FIG. 9 is a diagram for explaining the association of pieces of information about equipment apparatuses according to an embodiment (second embodiment) of the present disclosure;
[FIG. 10] FIG. 10 is a sequence diagram of a process for collecting information about equipment apparatuses according to an embodiment of the present disclosure;
[FIG. 11] FIG. 11 is a sequence diagram of a process for associating pieces of information about equipment apparatuses with each other, according to an embodiment of the present disclosure; and
[FIG. 12] FIG. 12 is a flowchart of a process for identifying the same property/properties based on address according to an embodiment of the present disclosure.

### Detailed description of the preferred embodiments

Hereinafter, embodiments of the present disclosure will be described with reference to the accompanying drawings.

### <Overall structure>

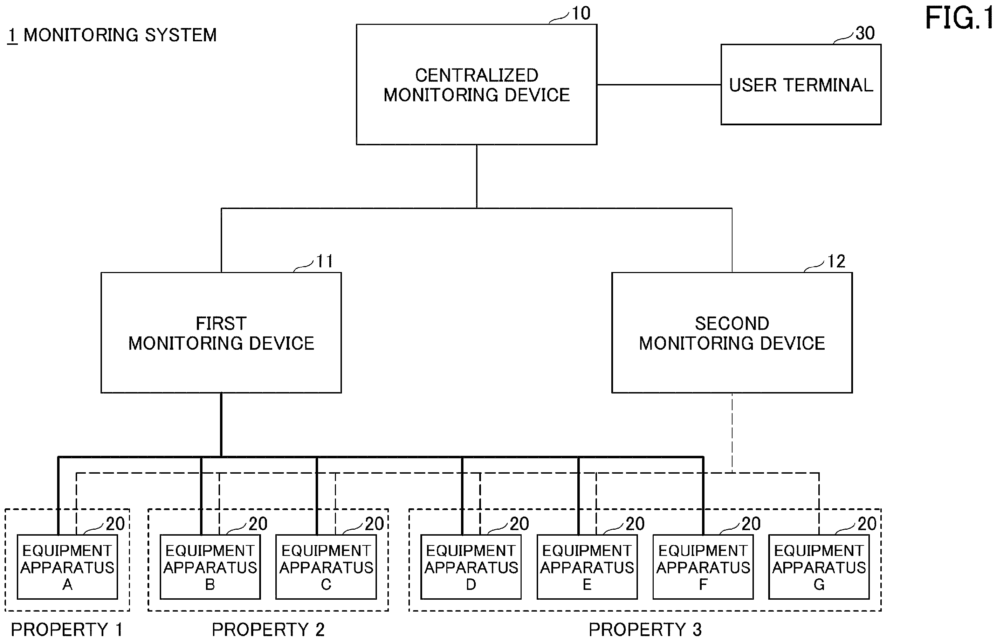

FIG. 1 shows an overall structure according to an embodiment of the present disclosure. A monitoring system 1 includes a centralized monitoring device 10, a first monitoring device 11 that monitors equipment apparatuses 20, and a second monitoring device 12 that monitors equipment apparatuses 20.

### <<Centralized monitoring device>>

The centralized monitoring device 10 obtains information about equipment apparatuses 20 from two or more monitoring devices and associates pieces of information about the equipment apparatuses 20 installed in the same property with each other (although cases with two monitoring devices, namely the first monitoring device 11 and the second monitoring device 12, will be described below, the present disclosure applies likewise to cases in which three or more monitoring devices are provided. The centralized monitoring device 10 is composed of one or more computers.

Note that pieces of information about equipment apparatuses, associated together or with each other by the centralized monitoring device 10, may be provided to the user terminals 30 of persons managing each property's equipment apparatuses 20.

### <<First monitoring device>>

The first monitoring device 11 (also referred to as a "monitoring device") monitors the equipment apparatuses 20 installed in multiple properties. The first monitoring device 11 is composed of one or more computers. The first monitoring device 11 obtains information related to the equipment apparatuses, such as monitoring data of the equipment apparatuses 20 (for example, the first monitoring device 11 receives monitoring data of the equipment apparatuses 20 from a communication device provided in the equipment apparatuses 20 via a network of choice).

### <<Second monitoring device>>

The second monitoring device 12 (also referred to as a "monitoring device") monitors the equipment apparatuses 20 installed in multiple properties. The second monitoring device 12 is composed of one or more computers. The second monitoring device 12 acquires information about the equipment apparatuses, such as monitoring data of the equipment apparatuses 20 (for example, the second monitoring device 12 receives monitoring data of the equipment apparatuses 20 from a communication device provided in the equipment apparatuses 20 via a network of choice).

Note that, as is the case with a property 1, one equipment apparatus in a property ("EQUIPMENT APPARATUS A" in the example of FIG. 1) may be monitored by the first monitoring device 11 and the second monitoring device 12. On the other hand, as is the case with a property 2, multiple equipment apparatuses in a property ("EQUIPMENT APPARATUS B" and "EQUIPMENT APPARATUS C" in the example of FIG. 1) may be monitored by the first monitoring device 11 and the second monitoring device 12. Furthermore, as is the case with a property 3, in addition to equipment apparatuses monitored by the first monitoring device 11 and the second monitoring device 12 ("EQUIPMENT APPARATUS D" and "EQUIPMENT APPARATUS E" in the example of FIG. 1), there may be other equipment apparatuses to be monitored by still another monitoring device ("EQUIPMENT APPARATUS F" and "EQUIPMENT APPARATUS G" in the example of FIG. 1).

For example, the first monitoring device 11 and the second monitoring device 12 may monitor different types of equipment apparatuses. That is, the first monitoring device 11 and the second monitoring device 12 may be, for example, "a monitoring device for monitoring air conditioners" and "a monitoring device for monitoring lighting equipment," respectively (that is, they may be monitoring devices to be provided per type of equipment apparatus).

Also, the first monitoring device 11 and the second monitoring device 12 may provide different services. That is, the first monitoring device 11 and the second monitoring device 12 may be, for example, "a monitoring device that provides an air conditioner operation service" and "a monitoring device that provides an air conditioner maintenance service," respectively (that is, they may be monitoring devices to be provided per type of service).

For example, one of the first monitoring device 11 and the second monitoring device 12 may be a monitoring device to be provided per type of equipment apparatus, and the other one may be a monitoring device to be provided per type of service.

### <<Equipment apparatuses>>

The equipment apparatuses 20 may be any equipment apparatuses such as air conditioners, lighting equipment, and so forth. Note that, although FIG. 1 shows equipment apparatuses A to G (collectively referred to as "equipment apparatuses 20"), the number of equipment apparatuses 20 is by no means limited to what is shown here.

### <<Properties>>

A property refers to a place where the equipment apparatuses 20 are installed (for example, a building). Note that a property may be monitored by one or more monitoring devices (that is, by at least one of the first monitoring device 11 and the second monitoring device 12).

### <Hardware structure>

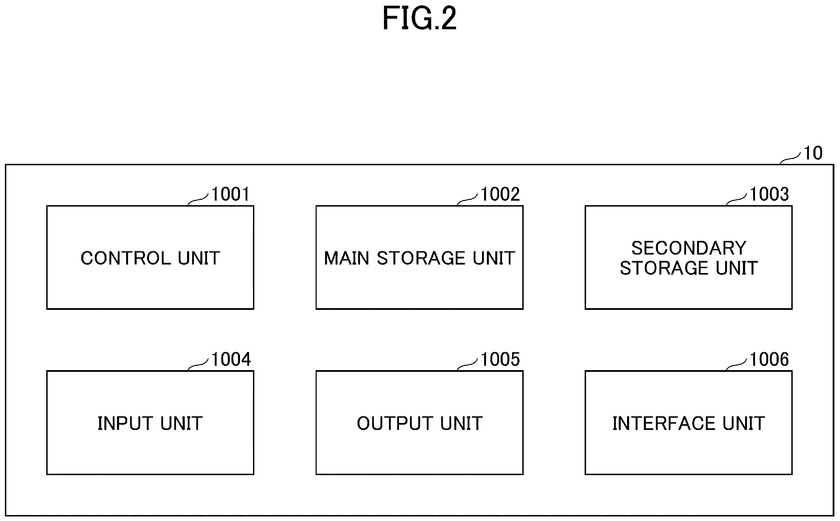

FIG. 2 shows a hardware structure of the centralized monitoring device 10 according to an embodiment of the present disclosure. Note that the same applies to the first monitoring device 11 and the second monitoring device 12.

The centralized monitoring device 10 may include a control unit 1001, a main storage unit 1002, a secondary storage unit 1003, an input unit 1004, an output unit 1005, and an interface unit 1006. Each of these will be described below.

The control unit 1001 is a processor (for example, a CPU (Central Processing Unit), a GPU (Graphics Processing Unit), etc.) that executes various programs installed in the secondary storage unit 1003.

The main storage unit 1002 includes a non-volatile memory (ROM (Read Only Memory)) and a volatile memory (RAM (Random Access Memory)). The ROM stores various programs, data, etc., that are needed when the control unit 1001 executes various programs installed in the secondary storage unit 1003. The RAM provides a working area that is expanded when the control unit 1001 executes various programs installed in the secondary storage unit 1003.

The secondary storage unit 1003 is a secondary storage device that stores various programs, data to be used when various programs are executed, and so forth.

The input unit 1004 is an input device where the operator of the centralized monitoring device 10 inputs various commands to the centralized monitoring device 10.

The output unit 1005 is an output device that outputs the internal state and the like of the centralized monitoring device 10.

The interface unit 1006 is a communication device for connecting to a network and communicating with other devices.

### <Functional structure>

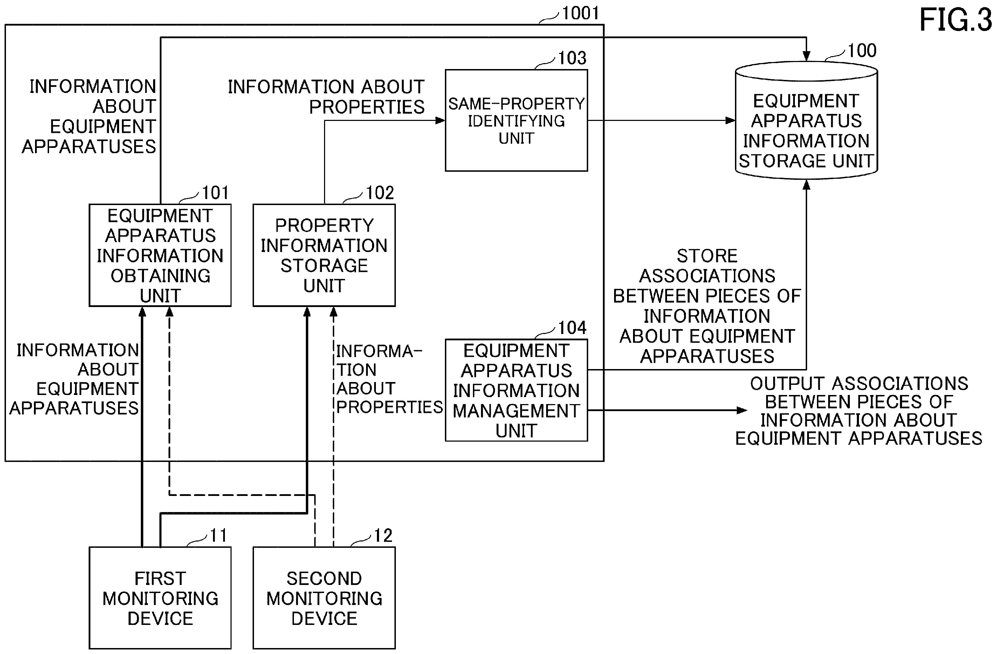

FIG. 3 shows a functional structure of the control unit 1001 according to an embodiment of the present disclosure. The control unit 1001 may include an equipment apparatus information obtaining unit 101, a property information obtaining unit 102, a same-property identifying unit 103, and an equipment apparatus information management unit 104. The control unit 1001 can function as the equipment apparatus information obtaining unit 101, the property information obtaining unit 102, the same-property identifying unit 103, and the equipment apparatus information management unit 104, by running programs. Note that the equipment apparatus information storage unit 100 is a storage unit included in the centralized monitoring device 10 and others.

The equipment apparatus information obtaining unit 101 obtains information about the equipment apparatuses monitored by the first monitoring device 11 from the first monitoring device 11, and obtains information about the equipment apparatuses monitored by the second monitoring device 12 from the second monitoring device 12. The equipment apparatus information obtaining unit 101 stores the obtained information about the equipment apparatuses in the equipment apparatus information storage unit 100.

As for monitoring data, which is an example of information related to equipment apparatuses (for example, operation data of equipment apparatuses), only the latest operation data (current values) may be stored. Alternatively, the latest operation data (current values) and past operation data may be both stored, or past operation data alone may be stored.

The property information obtaining unit 102 obtains information about the properties, in which the equipment apparatuses 20 monitored by the first monitoring device 11 are installed, from the first monitoring device 11, and obtains information about the properties, in which the equipment apparatuses 20 monitored by the second monitoring device 12 are installed, from the second monitoring device 12. The property information obtaining unit 102 stores the obtained property information in the equipment apparatus information storage unit 100.

Note that the property information obtaining unit 102 may obtain information about the properties in which the equipment apparatuses 20 monitored by the first monitoring device 11 are installed, and information about the properties in which the equipment apparatuses 20 monitored by the second monitoring device 12 are installed, from a device other than monitoring devices (the first monitoring device 11 and the second monitoring device 12).

Note that the property information obtaining unit 102 can obtain information about the properties when the equipment apparatuses are installed, when their test run is performed, etc.

The same-property identifying unit 103 identifies the same properties based on: information about the properties in which the equipment apparatuses 20 monitored by the first monitoring device 11 are installed (for example, information that the property information obtaining unit 102 obtains from the first monitoring device 11); and information about the properties in which the equipment apparatuses 20 monitored by the second monitoring device 12 are installed (for example, information that the property information obtaining unit 102 obtains from the second monitoring device 12). Note that the same-property identifying unit 103 may determine whether each piece of property information allows identification of a specific property, based on the accuracy of the property information, and identify the same properties by using only those pieces of property information having a predetermined accuracy (that is, only pieces of property information from which properties can be identified). Also, the same-property identifying unit 103 may convert property information into a predetermined format (which is also referred to as "normalization") and identify the same properties based on the property information as converted.

For example, the same-property identifying unit 103 may identify the same properties based on address information of properties included in respective pieces of property information. The same-property identifying unit 103 may convert the address information into a predetermined format (which is also referred to as "normalization") and find the same property based on the address information as converted. The same-property identifying unit 103 may determine whether each piece of address information allows identification of a specific property, based on the accuracy of the address information, and identify the same properties by using only those pieces of property information having a predetermined accuracy (that is, only pieces of property information from which properties can be identified).

Note that the same-property identifying unit 103 may present pieces of property information with their accuracy, to the user who operates the user terminal 30, and obtain the result of the user determining whether or not these pieces of property information pertain to the same property. Also, if there are pieces of property information not having a predetermined accuracy (that is, pieces of property information from which properties cannot be identified), the same-property identifying unit 103 may present these pieces of property information to the user who operates the user terminal 30, and obtain the result of the user determining whether or not these pieces of property information pertain to the same property.

### [Property information]

Here, property information and how to identify the same properties based on property information will be described. For example, a property's information is not limited to address information such as that described above, and may also include the name of the property, the longitude and latitude of the property, images of the property, the telephone number of the property, and so forth.

If a property's information includes the property's name, the same-property identifying unit 103 can identify properties having the same property name as the same property.

If a property's information includes the property's longitude and latitude, the same-property identifying unit 103 can identify properties having the same longitude and latitude as the same property.

If a property's information includes the property's images (for example, images of a building), the same-property identifying unit 103 can determine whether or not a property in a given image is the same property, so that properties showing images of the same property can be identified as the same property.

For example, information about a property may include one or more of the following items of information (for example, information that can be obtained from monitoring devices (the first monitoring device 11 and the second monitoring device 12)).

### [Property information]

- The property's address, name, longitude and latitude, images (for example, exterior images of a building, floor plan, etc.), telephone number, etc.

### [Equipment apparatus information]

- The names of equipment apparatuses such as air conditioners.
- The models of equipment apparatuses such as air conditioners (for example, their model names as listed in a catalogue).
- The product numbers or serial numbers of equipment apparatuses such as air conditioners.
- Monitoring data (operation data, image data, etc.) of equipment apparatuses such as air conditioners.
- The overall mechanical structure including IoT devices (for example, edge devices (communication devices installed in equipment apparatuses)) that are needed to allow the equipment apparatuses such as air conditioners to access the monitoring devices.
- The number of edge devices, the number of indoor units, and the number outdoor units.
- The Internet protocol (IP) addresses of equipment apparatuses such as air conditioners.

### [Contract information]

- Customer information, administrator's contact information, etc.
- User information for accessing property data.
- Sales history information of properties linked to the monitoring devices on a sales history management system.

### [Test run information]

- The date and time of test run, person in charge, etc.
- The IP (Internet Protocol) addresses and GPS (Global Positioning System) data of devices such as tablets to be used during the test runs of equipment apparatuses such as air conditioners.

For example, the same-property identifying unit 103 can identify the same property if equipment apparatuses with matching product numbers or serial numbers are installed. Also, if equipment apparatuses with matching models and product numbers or serial numbers are installed (in other words, when the models match, and, furthermore, the product numbers or the serial numbers match), the same-property identifying unit 103 can determine that these equipment apparatuses are installed in the same property.

### [Identification of the same property based on similarity]

For example, the same-property identifying unit 103 can identify the same property if the similarity between pieces of property information is greater than or equal to a threshold. The same-property identifying unit 103 can find the same property if the similarity between pieces of property information pertaining to multiple properties (for example, a combination of two or more pieces of property information such as the model and the product number or the serial number) is greater than or equal to a threshold).

For example, the same-property identifying unit 103 can specify in advance the importance of each case in which multiple pieces of property information match between multiple properties (for example, when a combination of two or more pieces of property information such as the model and the product number or the serial number match between multiple properties) as in the following cases (1) to (4), for example. Each combination of multiple pieces of property information, when matching the same combination of another property, gains a unique importance, and the total importance that a property thus has with respect to another property is the "similarity" between them. If this similarity is greater than or equal to a threshold, the same-property identifying unit 103 can determine that these properties are the same property.
(1) When an equipment apparatus's model and product number or serial number match between properties: importance "10."
(2) When the address and contact information of the property manager match between properties: importance "9."
(3) When the property name and user information for accessing property data match between properties: importance "8."
(4) When the exterior image(s) and plan view match between properties: importance "7."

For example, the same-property identifying unit 103 may specify in advance the importance of cases in which each piece of information of a property matches another property's information (as in the following cases (1') to (4'), for example). Each piece of property information, when matching the same information of another property, gains a unique importance, and the total importance that a property thus has with respect to another property is the "similarity" between them. If this similarity is greater than or equal to a threshold, the same-property identifying unit 103 can determine that these properties are the same property.
(1') When property information (property name) matches between properties: importance "5."
(2') When property information (address) matches between properties: importance "10."
(3') When property information (exterior image) matches between properties: importance "3."
(4') When equipment apparatus information (the product number or the serial number) matches between properties: importance "15."

In this way, by using information other than the address, such as the model, the product number, or the serial number, it is possible to identify the same properties even when there are different properties in the same building (that is, when there are multiple properties in one building) .

### [Accuracy of property information]

Here, the accuracy of property information will be described. The accuracy of property information refers to at least one of: the degree of precision (for example, the granularity) of the property information (for example, whether the property information indicates the location at which the property is located, or whether the property information indicates the area (certain range) in which the property is located, etc.); and the degree of accuracy (for example, the reliability) of the property information (for example, the certainty that the property is located at the indicated location, the certainty that the property is located in the indicated area (certain range), etc.).

The equipment apparatus information management unit 104 associates pieces of information about the equipment apparatuses installed in the same property identified by the same-property identifying unit 103 with each other, and stores the associated pieces of information in the equipment apparatus information storage unit 100. Note that the equipment apparatus information management unit 104 may also associate pieces of information about the equipment apparatuses installed in the same property identified by the same-property identifying unit 103 with each other, and output the associated pieces of information (for example, display the information on the screen of a device of choice, send data to a device of choice, etc.).

For example, when information about an equipment apparatus collected from the first monitoring device 11 and information about an equipment apparatus collected from the second monitoring device 12 pertain to the same equipment apparatus, the equipment apparatus information management unit 104 may store only the information about the equipment apparatus collected from one monitoring device. For example, when information about an equipment apparatus collected from the first monitoring device 11 and information about an equipment apparatus collected from the second monitoring device 12 pertain to the same equipment apparatus, the equipment apparatus information management unit 104 may store both the information about the equipment apparatus collected from the first monitoring device 11 and the information about the equipment apparatus collected from the second monitoring device 12.

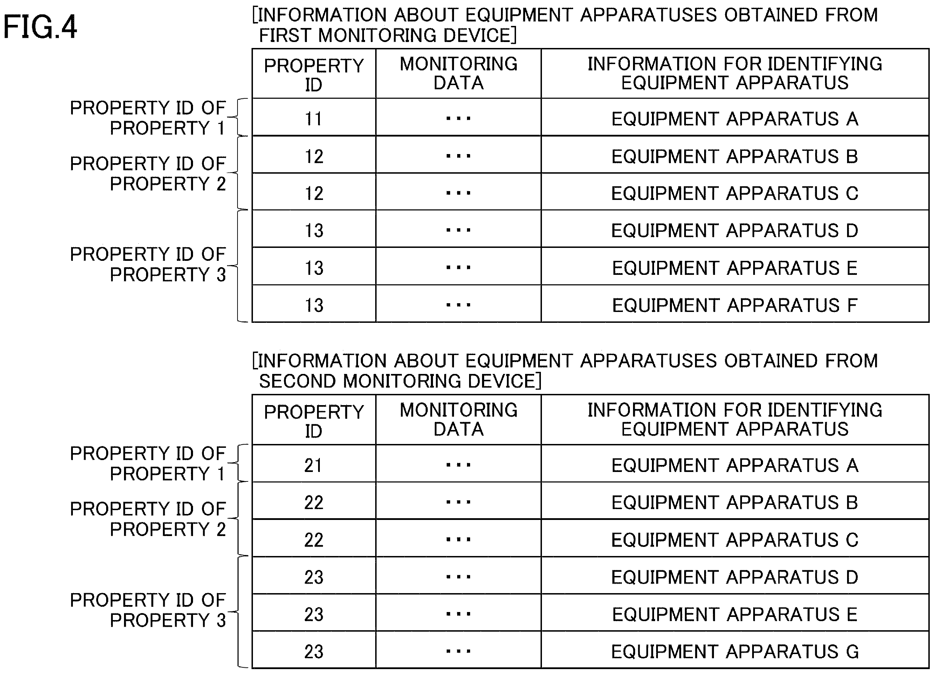

FIG. 4 shows examples of information about equipment apparatuses according to an embodiment of the present disclosure. For example, information about an equipment apparatus includes a "property ID," "monitoring data," and "information for identifying the equipment apparatus."

The "property ID" is an ID assigned to each property by each monitoring device. Note that, if no property ID is assigned by monitoring devices, the centralized monitoring device 10 may assign a property ID (note that the centralized monitoring device 10 may identify each property by any method of choice). In the example of FIG. 4, the first monitoring device 11 assigns a property ID "11" to a property 1, and the second monitoring device 12 assigns a property ID "21" to the property 1. Also, the first monitoring device 11 assigns a property ID "12" to a property 2, and the second monitoring device 12 assigns a property ID "22" to the property 2. Also, the first monitoring device 11 assigns a property ID "13" to a property 3, and the second monitoring device 12 assigns a property ID "23" to the property 3.

"Monitoring data" is any data obtained from each equipment apparatus 20 installed in a property (for example, an air conditioner's operation data).

"Information for identifying the equipment apparatus" is any information that makes it possible to identify the equipment apparatus 20 installed in a property. For example, "information for identifying the equipment apparatus" is the product number (serial number) of the equipment apparatus 20, the network address of the equipment apparatus 20, the specific location where the equipment apparatus 20 is installed (for example, which room and which floor in a building the equipment apparatus 20 is installed in, etc.), and so forth.

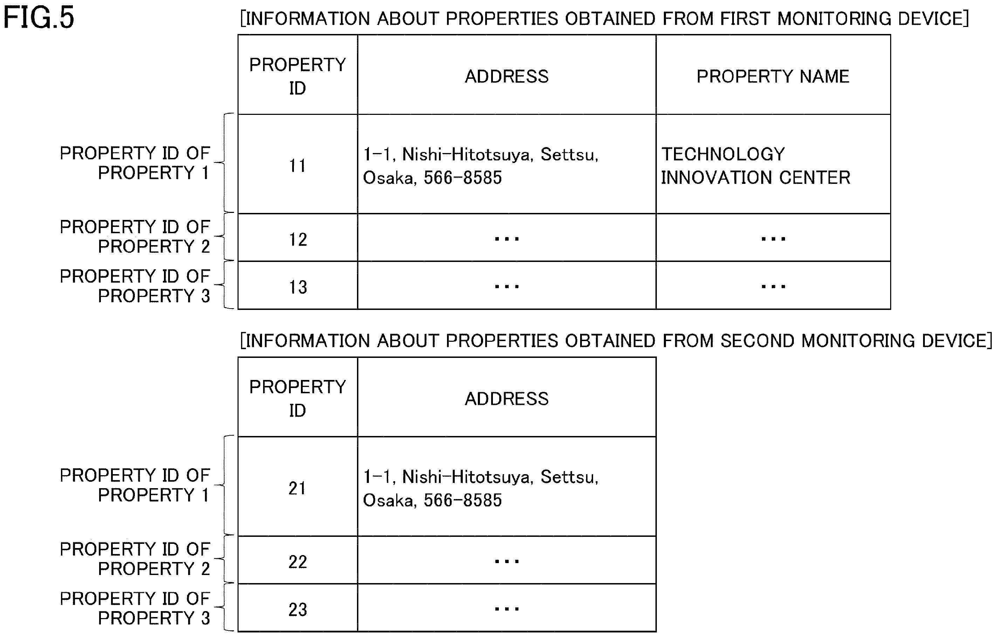

FIG. 5 is an example of property information according to an embodiment of the present disclosure. For example, information about a property includes a "property ID," an "address," and a "property name."

The "property ID" is an ID assigned to each property by each monitoring device. Note that, if no property ID is assigned by monitoring devices, the centralized monitoring device 10 may assign a property ID. In the example of FIG. 5, the first monitoring device 11 assigns a property ID "11" to a property 1, and the second monitoring device 12 assigns a property ID "21" to the property 1. Also, the first monitoring device 11 assigns a property ID "12" to a property 2, and the second monitoring device 12 assigns a property ID "22" to the property 2. Also, first monitoring device 11 assigns a property ID of "13" to a property 3, and the second monitoring device 12 assigns a property ID of "23" to the property 3.

"Address" is the address of the property. Note that the address does not have to be written in Japanese, and may be written in any language of choice.

"Property name" is the name of the property. Note that the property information may include "property name" (in the example of FIG. 5, the property information from the first monitoring device 11 includes "property name") or may not include "property name" (in the example of FIG. 5, the property information from the second monitoring device 12 does not include "property name").

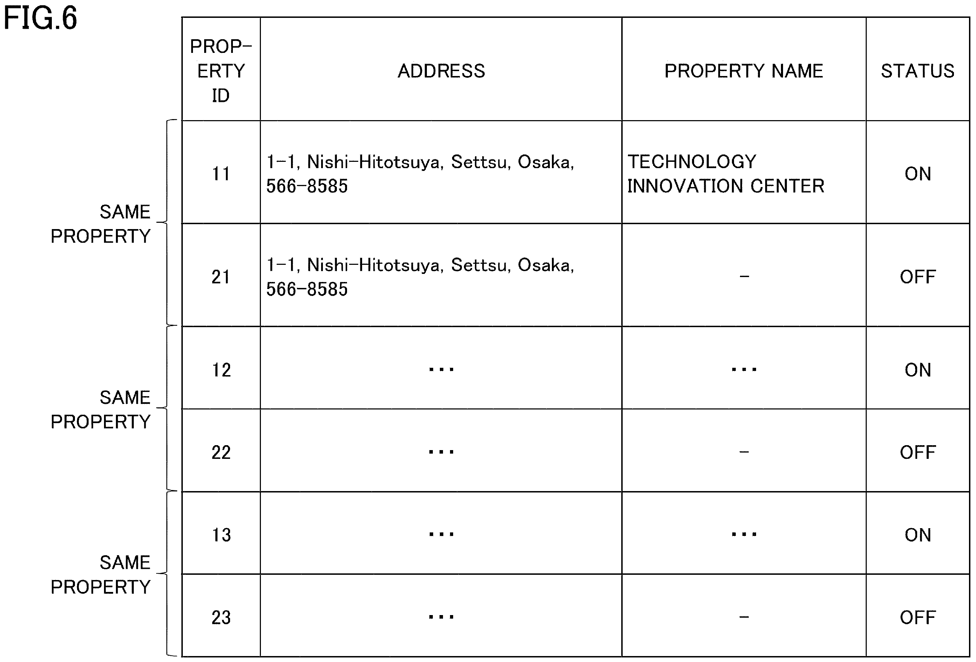

FIG. 6 is a diagram for explaining the management of the same properties according to an embodiment (first embodiment) of the present disclosure. The centralized monitoring device 10 can identify the same property based on address information of properties obtained from the first monitoring device 11 and address information of the properties obtained from the second monitoring device 12. The centralized monitoring device 10 can associate respective pieces of information of the identified same property with each other.

As shown in FIG. 6, when the normalized address of the address with the property ID "11" (that is, an address converted into a predetermined format) and the normalized address of the address with the property ID "21" (that is, an address converted into a predetermined format) match, the centralized monitoring device 10 identifies the two properties (the property with the property ID "11" and the property with the property ID "21") as the same property. Similarly, when the normalized address of the address with the property ID "12" (that is, an address converted into a predetermined format) and the normalized address of the address with the property ID "22" (that is, an address converted into a predetermined format) match, the centralized monitoring device 10 identifies the two properties as the same property (property with the property ID "12" and property with the property ID "22"). Similarly, if the normalized address of the address with the property ID "13" (that is, an address converted into a predetermined format) and the normalized address of the address with the property ID "23" (that is, an address converted into a predetermined format) match, the centralized monitoring device 10 identifies the two properties (the property with the property ID "13" and the property with the property ID "23") as the same property.

Note that the centralized monitoring device 10 may adopt (that is, enable the status of) the property information from a specific monitoring device (for example, property information from a monitoring device that manages the names of properties) as property information for use by the centralized monitoring device 10, and disables the status of other properties' information associated with the property information (property information adopted by the centralized monitoring device 10). In this way, the centralized monitoring device 10 can control the centralized monitoring device 10 to use one of the property information of the equipment apparatuses 20 installed in the first monitoring device 11 and the property information of the equipment apparatuses 20 installed in the second monitoring device 12, which are identified as the same property.

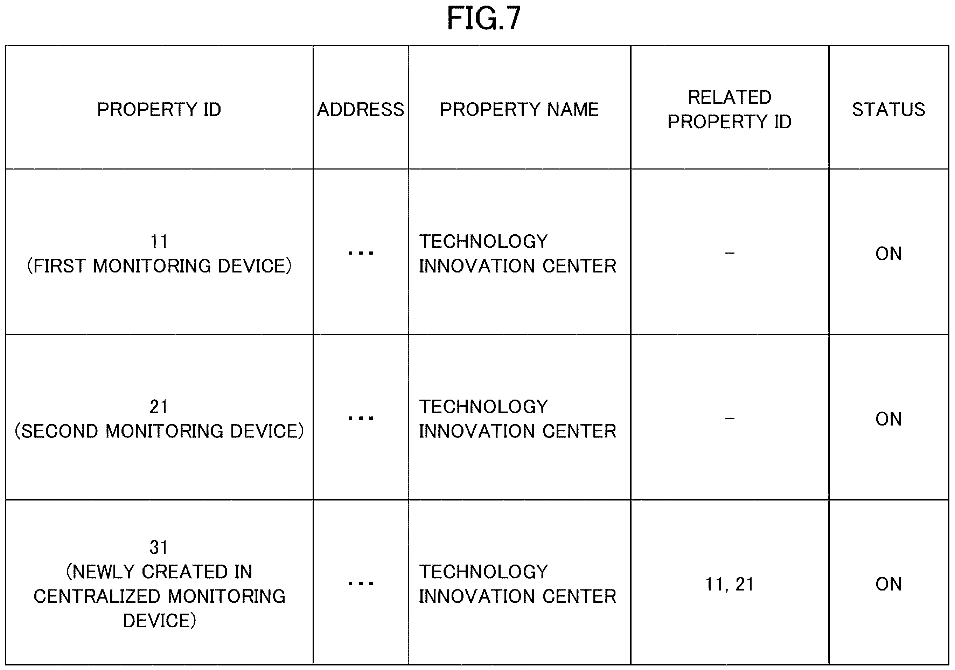

FIG. 7 is a diagram for explaining the management of the same properties according to an embodiment of the present disclosure (second embodiment). Differences from the first embodiment of FIG. 6 will be described.

According to a second embodiment, referring to FIG. 7, the centralized monitoring device 10 identifies the same property based on information about properties in which the equipment apparatuses 20 monitored by the first monitoring device 11 are installed and information about properties in which the equipment apparatuses 20 monitored by the second monitoring device 12 are installed. The centralized monitoring device 10 can link the information about the properties that are identified to be the same property (in the example of FIG. 7, the property ID "11" under the first monitoring device 11 and the property ID "21" under the second monitoring device 12) with newly created property information (in the example of FIG. 7, that with the property ID "31"), and adopt (in other words, enable the status of) the newly created property information (in the example of FIG. 7, that with the property ID "31") as property information for use by the centralized monitoring device 10. Note that the centralized monitoring device 10 may also enable the status of property information other than newly created property information (in the example of FIG. 7, the property ID "11" under the first monitoring device 11 and the property ID "21" under the second monitoring device 12).

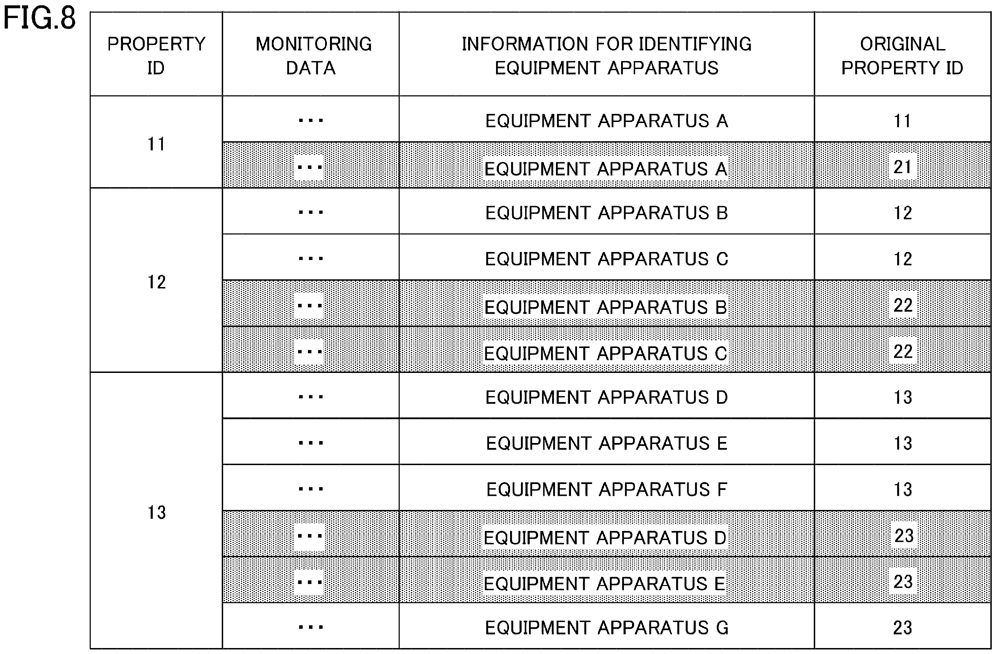

FIG. 8 is a diagram for explaining the association between pieces of information about equipment apparatuses according to an embodiment (first embodiment) of the present disclosure.

### [Association]

As shown in FIG. 8, the centralized monitoring device 10 associates pieces of information about the equipment apparatuses installed in the same property with each other. For example, the centralized monitoring device 10 assigns a property ID of property information adopted by the centralized monitoring device 10 to the information about the equipment apparatuses installed in the same property, and manages these pieces of information together.

To be more specific, the centralized monitoring device 10 assigns the property ID (property ID "11") of the property information adopted by the centralized monitoring device 10, to the information about the equipment apparatuses installed in the property with the property ID "11" and in the property with the property ID "21," and manages these pieces of information together (information about equipment apparatus A with the property ID "11" and information about equipment apparatus A with the property ID "21"). Also, the centralized monitoring device 10 assigns the property ID (property ID "12") of the property information adopted by the centralized monitoring device 10, to the information about the equipment apparatuses installed in the property with the property ID "12" and in the property with the property ID "22" (information about equipment apparatus B and information about equipment apparatus C under the property ID "12," plus information about equipment apparatus B and information about equipment apparatus C under the property ID "22") and manages these pieces of information together. Furthermore, the centralized monitoring device 10 assigns the property ID (property ID "13") of the property information adopted by the centralized monitoring device 10, to the information about the equipment apparatuses installed in the property with the property ID "13" and the property with the property ID "23" (information about equipment apparatus D and information about equipment apparatus F under the property ID "13," plus information about equipment apparatus E and information about equipment apparatus G under the property ID "23") and manages these pieces of information together.

### [Management of original property ID]

The centralized monitoring device 10 may assign the original property IDs assigned to each equipment apparatus information and manage the information (that is, the property ID assigned to each piece of information about equipment apparatuses obtained from monitoring devices).

### [Management of overlapping data]

Assuming that there are pieces of information pertaining to the same equipment apparatus, the centralized monitoring device 10 may store only the information about the equipment apparatus collected from one monitoring device (for example, the information about the equipment apparatus collected by the monitoring device that manages the property information adopted by the centralized monitoring device 10) (that is, the shaded portion in FIG. 8 is not stored).

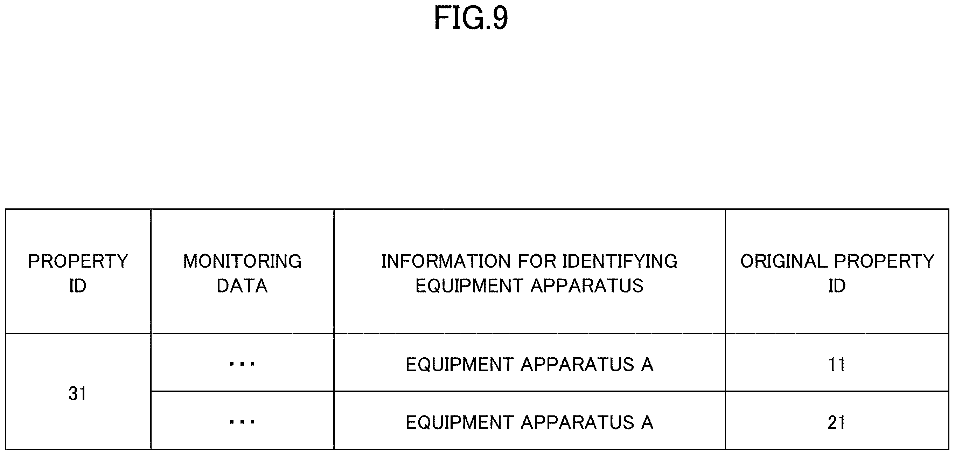

FIG. 9 is a diagram for explaining the association of pieces of information about equipment apparatuses according to an embodiment (second embodiment) of the present disclosure. Differences from the first embodiment of FIG. 8 will be explained.

According to the second embodiment of FIG. **9****,** the centralized monitoring device 10 assigns the property ID of property information that is newly created by the centralized monitoring device 10, to information about the equipment apparatuses installed in the same property, and manages these pieces of information together.

To be more specific, the centralized monitoring device 10 assigns the property ID (property ID "31") of the property information newly created by the centralized monitoring device 10 to the information about the equipment apparatuses installed in the property with the property ID "11" and the property with the property ID "21" (information about equipment apparatus A under the property ID "11" and information about equipment apparatus A under the property ID "21") and manages these pieces of information together.

### [Management of original property ID]

The centralized monitoring device 10 may assign the original property ID to each piece of equipment apparatus information and manage that information (that is, the property ID that was originally assigned to the information about equipment apparatuses obtained from each monitoring device).

### [Management of overlapping data]

Assuming that there are pieces of information about the same equipment apparatus, the centralized monitoring device 10 may store information about the equipment apparatus collected from any of the monitoring devices (that is, if information about an equipment apparatus collected from the first monitoring device 11 and information about an equipment apparatus collected from the second monitoring device 12 pertain to the same equipment apparatus, both the information about the equipment apparatus collected from the first monitoring device 11 and the information about the equipment apparatus collected from the second monitoring device 12 may be stored).

### <Method>

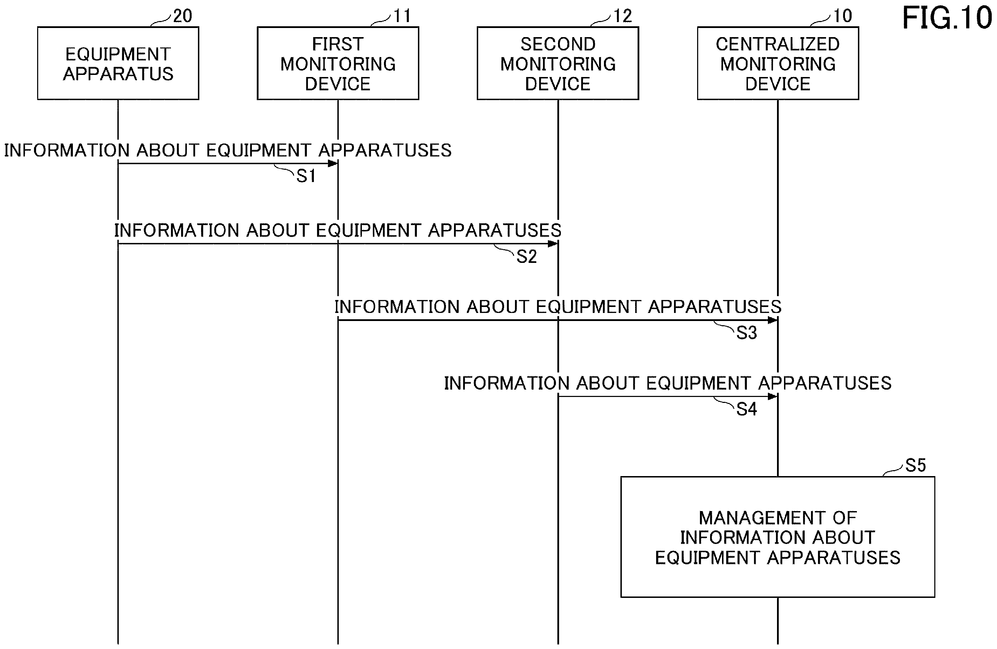

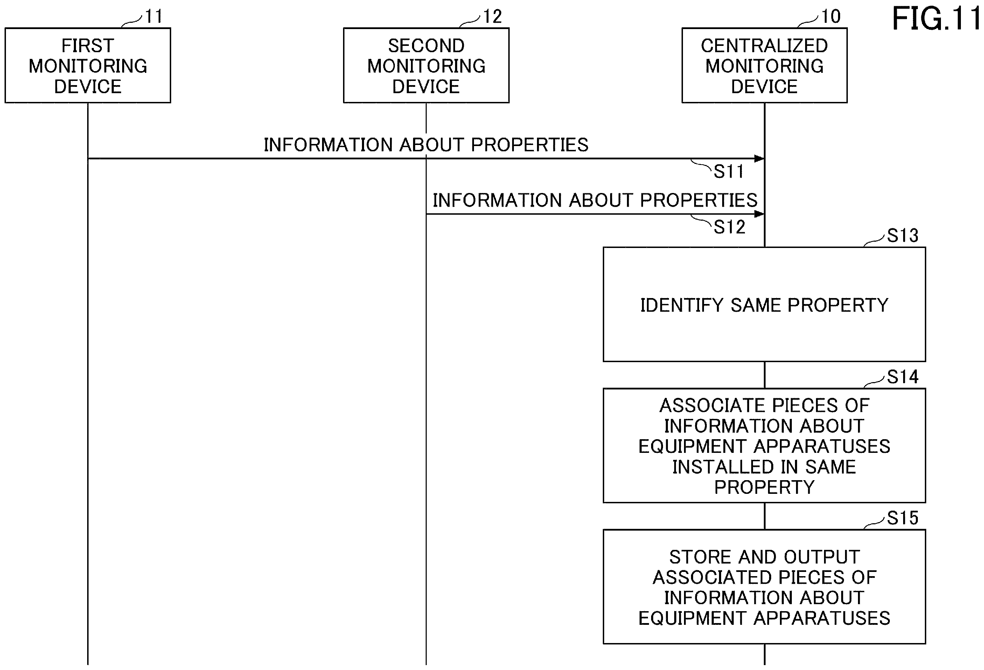

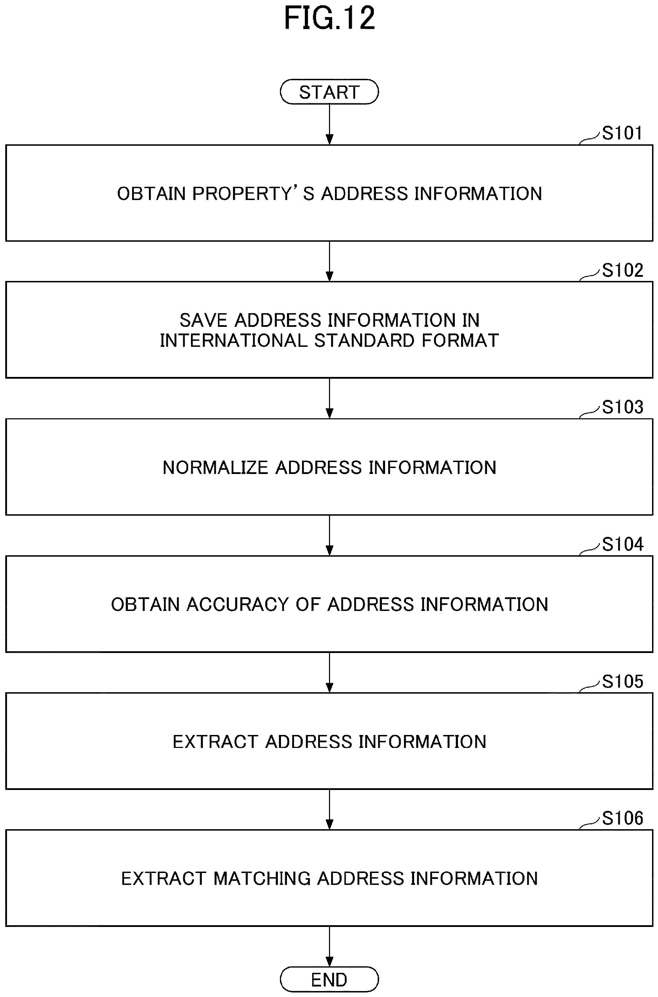

The process of collecting information about equipment apparatuses will be described with reference to FIG. 10. The association of pieces of information about equipment apparatuses will be described with reference to FIG. 11. The identification of the same property will be described with reference to FIG. **12****.**

### [Collection of information about equipment apparatuses]

FIG. 10 is a sequence diagram of a process of collecting information about equipment apparatuses according to an embodiment of the present disclosure.

In step 1 (S1), the equipment apparatuses 20 monitored by the first monitoring device 11 each transmit information about the equipment apparatus to the first monitoring device 11.

In step 2 (S2), the equipment apparatuses 20 monitored by the second monitoring device 12 each transmit information about the equipment apparatus to the second monitoring device 12.

Note that S1 and S2 may be executed simultaneously, or their order may be reversed.

In step 3 (S3), the first monitoring device 11 transmits the information about equipment apparatuses obtained in S1 to the centralized monitoring device 10.

In step 4 (S4), the second monitoring device 12 transmits the information about equipment apparatuses obtained in S2 to the centralized monitoring device 10.

Note that S3 and S4 may be executed simultaneously, or their order may be reversed.

In step 5 (S5), the centralized monitoring device 10 manages the information about equipment apparatuses obtained in S3 and S4.

### [Association of pieces of information about equipment apparatuses]

FIG. 11 is a sequence diagram of the process of associating pieces of information about equipment apparatuses with each other, according to an embodiment of the present disclosure (process of managing information about equipment apparatuses in S5 of FIG. 10).

In step 11 (S11), the first monitoring device 11 transmits information about properties in which the equipment apparatuses 20 monitored by the first monitoring device 11 are installed, to the centralized monitoring device 10.

In step 12 (S12), the second monitoring device 12 transmits information about properties in which the equipment apparatuses 20 monitored by the second monitoring device 12 are installed, to the centralized monitoring device 10.

Note that S11 and S12 may be executed simultaneously, or their order may be reversed.

In step 13 (S13), the centralized monitoring device 10 identifies the same property based on the information of properties obtained from the first monitoring device 11 in S11 and the information of properties obtained from the second monitoring device 12 in S12.

In step 14 (S14), the centralized monitoring device 10 associates pieces of information about the equipment apparatuses installed in the same property, identified in S13, with each other.

In step 15 (S15), the centralized monitoring device 10 stores the pieces of information associated with each other in S14, in the equipment apparatus information storage unit 100, or outputs the associated pieces of information (for example, display the information on the screen of a device of choice, send data to a device of choice, etc.).

### [Identification of the same property]

FIG. 12 is a flowchart of the process of identifying the same property/properties based on address, according to an embodiment of the present disclosure (example of S11, S12, and S13 in FIG. 11).

In step 101 (S101), the centralized monitoring device 10 obtains address information for the property.

For example, the centralized monitoring device 10 obtains address information in Japanese format ({zip} {state} {city} {street} {house number}), address information in US format ({house number} {street} {city} {state} {zip} {state} {country}), etc.

In step 102 (S102), the centralized monitoring device 10 saves the address information obtained in S101 in an international standard format ({house number} {street}, {zip} {city} {state}, {country}).

In step 103 (S103), the centralized monitoring device 10 normalizes the address information saved in S102 in the international standard format (that is, an address converted into a predetermined format). Note that the centralized monitoring device 10 may use a service of normalizing address information and providing a normalized address with its accuracy.

### [Normalization of address information]

Here, the normalization of address information will be explained. Normalization of address information means converting address information into a predetermined format (for example, {house number} {street}, {city}, {state} {zip}, {country}) and a predetermined language so as to eliminate variations in format.

In step 104 (S104), the centralized monitoring device 10 obtains the accuracy of the address information normalized in S103.

In step 105 (S105), the centralized monitoring device 10 extracts address information having a predetermined accuracy as obtained in S104 is (to be more specific, address information that allows identification of properties).

In step 106 (S106), the centralized monitoring device 10 extracts pieces of address information that each other, from the address information extracted in S105.

According to the present disclosure, a centralized monitoring device 10 collects information about equipment apparatuses 20 from a first monitoring device 11 configured to monitor equipment apparatuses 20 installed in a plurality of properties and from a second monitoring device 12 configured to monitor equipment apparatuses 20 installed in a plurality of properties, and the centralized monitoring device 10 includes a control unit 1001 that is configured to:
obtain information about properties in which the equipment apparatuses 20 monitored by the first monitoring device 11 are installed;
obtain information about properties in which the equipment apparatuses 20 monitored by the second monitoring device 12 are installed;
identify a same property based on both the information about the property in which the equipment apparatuses 20 monitored by the first monitoring device 11 are installed and the information about the property in which the equipment apparatuses 20 monitored by the second monitoring device 12 are installed; and
store both pieces of information about the equipment apparatuses 20 installed in the properties identified as the same property, in association with each other.

By this means, data collected from monitoring devices that monitor different types of equipment apparatuses, such as "a monitoring device that monitors air conditioners" and "a monitoring device that monitors lighting equipment" (that is, devices provided for per type of equipment apparatus), can be linked together. Also, data collected from monitoring devices that provide different services, such as "a monitoring device that provides an air conditioner operation service" and "a monitoring device that monitors an air conditioner maintenance service" (that is, monitoring devices provided per type of service), can be linked together. Also, data collected from monitoring devices provided for each type of equipment apparatus and data collected from monitoring devices provided for each service can be linked.

Preferably, the information about each property may include address information of the property, and the control unit 1001 may identify the properties as the same property based on the address information. This use of address makes it possible to identify the same property more accurately.

Preferably, the control unit 1001 may convert the information about each property (for example, address information) into a predetermined format to identify the same property based on the information about each property (for example, address information) as converted.

By this means, even when there are variations in format between monitoring devices, it is possible to provide normalized addresses (that is, in a unified format) and identify the same property.

Preferably, the control unit 1001 may determine whether the information about each property (for example, address information) allows identification of the each property, based on accuracy of the information about the each property (for example, address information).

This allows useful information to be used.

Preferably, when the same property is identified, the control unit 1001 may control the centralized monitoring device 10 to use either the information about the property in which the equipment apparatuses 20 monitored by the first monitoring device 11 are installed or the information about the property in which the equipment apparatuses 20 monitored by the second monitoring device 12 are installed.

This eliminates the need to manage information on multiple properties.

Preferably, when the same property is identified, the control unit 1001 may link the information about the property in which the equipment apparatuses 20 monitored by the first monitoring device 11 are installed and the information about the property in which the equipment apparatuses 20 monitored by the second monitoring device 12 are installed, with newly created property information, and the control unit 1001 may control the centralized monitoring device 10 to use the newly created property information.

This makes it possible to link information about properties monitored by various monitoring devices with newly created property information.

Preferably, when information about an equipment apparatus collected from the first monitoring device 11 and information about an equipment apparatus collected from the second monitoring device 12 pertain to the same equipment apparatus, the control unit 1001 may store only the information about the equipment apparatus collected from one monitoring device.

As a result of this, when the first monitoring device 11 and the second monitoring device 12 are monitoring devices provided per type of service, or when the first monitoring device 11 and the second monitoring device 12 are a monitoring device that is provided per type of service and a monitoring device that is provided per type of equipment apparatus, it suffices to manage only one of the overlapping data.

Preferably, when information about an equipment apparatus 20 collected from the first monitoring device 11 and information about an equipment apparatus 20 collected from the second monitoring device 12 pertain to the same equipment apparatus 20, the control unit 1001 may store both the information about the equipment apparatus 20 collected from the first monitoring device 11 and the information about the equipment apparatus 20 collected from the second monitoring device 12.

This makes it possible to store information about equipment apparatuses 20 from various monitoring devices.

According to an embodiment of the present disclosure, a method is implemented by a centralized monitoring device 10 that collects information about equipment apparatuses 20 from a first monitoring device 11 configured to monitor equipment apparatuses 20 installed in a plurality of properties and from a second monitoring device 12 configured to monitor equipment apparatuses 20 installed in a plurality of properties. The method includes steps of:
obtaining information about properties in which the equipment apparatuses 20 monitored by the first monitoring device 11 are installed;
obtaining information about properties in which the equipment apparatuses 20 monitored by the second monitoring device 12 are installed;
identifying a same property based on both the information about the property in which the equipment apparatuses 20 monitored by the first monitoring device 11 are installed and the information about the property in which the equipment apparatuses 20 monitored by the second monitoring device 12 are installed; and
storing both pieces of information about the equipment apparatuses 20 installed in the properties identified as the same property, in association with each other.

This makes it possible to link together pieces of information collected from multiple monitoring devices about the equipment apparatuses 20 installed in the same property.

According to an embodiment of the present disclosure, a program is implemented by a centralized monitoring device 10 that collects information about equipment apparatuses 20 from a first monitoring device 11 configured to monitor equipment apparatuses 20 installed in a plurality of properties and from a second monitoring device 12 configured to monitor equipment apparatuses 20 installed in a plurality of properties. The program causes the centralized monitoring device 10 to:
obtain information about properties in which the equipment apparatuses 20 monitored by the first monitoring device 11 are installed;
obtain information about properties in which the equipment apparatuses 20 monitored by the second monitoring device 12 are installed;
identify a same property based on both the information about the property in which the equipment apparatuses 20 monitored by the first monitoring device 11 are installed and the information about the property in which the equipment apparatuses 20 monitored by the second monitoring device 12 are installed; and
store both pieces of information about the equipment apparatuses 20 installed in the properties identified as the same property, in association with each other.

This makes it possible to link together pieces of information collected from multiple monitoring devices about the equipment apparatuses 20 installed in the same property.

Although embodiments of the present disclosure have been described above, it should be understood that various changes in form and details are possible without departing from the spirit and scope of the claims attached herewith.

This application is based on and claims priority to Japanese Patent Application No. 2023-116599, filed on July 18, 2023, the entire contents of which are hereby incorporated by reference herein.

### Reference Signs List

- 1: monitoring system
- 10: centralized monitoring device
- 11: first monitoring device
- 12: second monitoring device
- 20: equipment apparatus
- 30: user terminal
- 100: equipment apparatus information storage unit
- 101: equipment apparatus information obtaining unit
- 102: property information obtaining unit
- 103: same-property identifying unit
- 104: equipment apparatus information management unit
- 1001: control unit
- 1002: main storage unit
- 1003: secondary storage unit
- 1004: input unit
- 1005: output unit
- 1006: interface unit

## Claims

1. A centralized monitoring device for collecting information about equipment apparatuses from a first monitoring device configured to monitor equipment apparatuses installed in a plurality of properties and from a second monitoring device configured to monitor equipment apparatuses installed in a plurality of properties, the centralized monitoring device comprising a control unit configured to:
obtain information about properties in which the equipment apparatuses monitored by the first monitoring device are installed;
obtain information about properties in which the equipment apparatuses monitored by the second monitoring device are installed;
identify a same property based on both the information about the properties in which the equipment apparatuses monitored by the first monitoring device are installed and the information about the properties in which the equipment apparatuses monitored by the second monitoring device are installed; and
store both pieces of information about the equipment apparatuses installed in the properties identified as the same property, in association with each other.

2. The centralized monitoring device according to claim 1, wherein the control unit converts the information about each property into a predetermined format to identify the same property based on the information about each property as converted.

3. The centralized monitoring device according to claim 1 or 2, wherein the control unit determines whether the information about each property allows identification of the each property, based on accuracy of the information about the each property.

4. The centralized monitoring device according to any one of claims 1 to 3, wherein, when the same property is identified, the control unit controls the centralized monitoring device to use either the information about the properties in which the equipment apparatuses monitored by the first monitoring device are installed or the information about the properties in which the equipment apparatuses monitored by the second monitoring device are installed.

5. The centralized monitoring device according to any one of claims 1 to 3,
wherein, when the same property is identified, the control unit links the information about the properties in which the equipment apparatuses monitored by the first monitoring device are installed and the information about the properties in which the equipment apparatuses monitored by the second monitoring device are installed, with newly created property information; and
wherein the control unit controls the centralized monitoring device to use the newly created property information.

6. The centralized monitoring device according to any one of claims 1 to 5, wherein, when information about an equipment apparatus collected from the first monitoring device and information about an equipment apparatus collected from the second monitoring device pertain to a same equipment apparatus, the control unit stores only the information about the equipment apparatus collected from one monitoring device.

7. The centralized monitoring device according to any one of claims 1 to 5, wherein, when information about an equipment apparatus collected from the first monitoring device and information about an equipment apparatus collected from the second monitoring device pertain to a same equipment apparatus, the control unit stores both the information about the equipment apparatus collected from the first monitoring device and the information about the equipment apparatus collected from the second monitoring device.

8. A method implemented by a centralized monitoring device that collects information about equipment apparatuses from a first monitoring device configured to monitor equipment apparatuses installed in a plurality of properties and from a second monitoring device configured to monitor equipment apparatuses installed in a plurality of properties, the method comprising steps of:
obtaining information about properties in which the equipment apparatuses monitored by the first monitoring device are installed;
obtaining information about properties in which the equipment apparatuses monitored by the second monitoring device are installed;
identifying a same property based on both the information about the properties in which the equipment apparatuses monitored by the first monitoring device are installed and the information about the properties in which the equipment apparatuses monitored by the second monitoring device are installed; and
storing both pieces of information about the equipment apparatuses installed in the properties identified as the same property, in association with each other.

9. A program for causing a centralized monitoring device that collects information about equipment apparatuses from a first monitoring device configured to monitor equipment apparatuses installed in a plurality of properties and from a second monitoring device configured to monitor equipment apparatuses installed in a plurality of properties, to:
obtain information about properties in which the equipment apparatuses monitored by the first monitoring device are installed;
obtain information about properties in which the equipment apparatuses monitored by the second monitoring device are installed;
identify a same property based on both the information about the properties in which the equipment apparatuses monitored by the first monitoring device are installed and the information about the properties in which the equipment apparatuses monitored by the second monitoring device are installed; and
store both pieces of information about the equipment apparatuses installed in the properties identified as the same property, in association with each other.
